# EUROPÄISCHE PATENTSCHRIFT

(11) **EP 2 756 625 B1**
(45) Veröffentlichungstag und Bekanntmachung des Hinweises auf die Patenterteilung: **09.10.2019**
(21) Anmeldenummer: 12748414.5
(22) Anmeldetag: 08.08.2012
(51) Int. Cl.: H04L 9/06

(54) **VERSCHLÜSSELUNG BASIEREND AUF NETZWERKINFORMATIONEN**
ENCRYPTION BASED ON NETWORK INFORMATION
CHIFFREMENT BASÉ SUR DES INFORMATIONS DE RÉSEAU

(30) Priorität: 15.09.2011 DE 102011082741
(43) Veröffentlichungstag der Anmeldung: 23.07.2014
(73) Patentinhaber: Rohde & Schwarz GmbH & Co. KG, 81671 München (DE)
(72) Erfinder: MÜLLER, Thorsten, 85716 Unterschleißheim (DE); EICHLER, Stephan, 82299 Türkenfeld (DE)
(74) Vertreter: Körfer, Thomas
(86) Internationale Anmeldenummer: PCT/EP2012/065496
(87) Internationale Veröffentlichungsnummer: WO 2013/037569

(56) Entgegenhaltungen:
- WO-A2-2011/044351
- US-A- 6 055 316
- US-A1- 2007 133 791
- US-A1- 2008 287 118

## Beschreibung

Die Erfindung betrifft eine Kommunikationsvorrichtung, ein Kommunikationsnetzwerk und ein Kommunikationsverfahren.

Von großer Bedeutung ist der verschlüsselte Datenaustausch über ein gemeinsames Medium, wie dem Internet, ohne Unbefugten Einsicht in die zu übertragenden Daten gewähren zu müssen (Schutz der Vertraulichkeit). Bei Anwendungen, welche ein Höchstmaß an Sicherheit erfordern, werden üblicherweise symmetrische Verschlüsselungsverfahren wie z.B. AES (Advanced Encryption Standard; dt.: fortschrittlicher Verschlüsselungsstandard) eingesetzt. Bei symmetrischen Verschlüsselungsverfahren erfolgt die Verschlüsselung mittels eines Schlüssels, welcher lediglich dem Sender und dem Empfänger bekannt ist, und mittels eines Initialisierungsvektors, welcher zusammen mit verschlüsselten Daten von dem Sender an den Empfänger übertragen wird.

Das Dokument WO 2007/059558 offenbart ein verschlüsselndes Kommunikationssytem bei welchem Initialisierungsvektoren für eine Verschlüsselung basierend auf verschiedene Rohdaten generiert werden.

Aus der DE 10 2008 013 785 A1 sind eine Vorrichtung und ein Verfahren bekannt, mit denen ein Datenstrom in einzelne Blöcke aufgeteilt wird, wobei die einzelnen Blöcke verschlüsselt werden und wobei über die einzelnen verschlüsselten Datenblöcke eine gemeinsame Prüfsumme berechnet wird. Hierzu wird ein Verfahren genutzt, welches unter dem Namen "Galois Counter Mode" (dt. Galois Zählermodus) bekannt ist.

Nachteilig an der DE 10 2008 013 785 A1 ist, dass die Initialisierungsvektoren dort zufällig vergeben werden. D.h. es ist möglich, dass Übertragungen, welche mittels eines identischen Schlüssels verschlüsselt sind, zufällig auch einen identischen Initialisierungsvektor aufweisen. Insbesondere bei Übertragungen hoher Datenrate, bei welchen häufig ein neuer zufälliger Initialisierungsvektor gebildet wird, kann es vorkommen, dass zwei Pakete mit identischem Schlüssel und identischem Initialisierungsvektor auftreten. In diesem Fall ist es möglich, Rückschlüsse auf den Informationsgehalt der unverschlüsselten Daten zu ziehen, ohne eine vollständige Entschlüsselung durchführen zu müssen. Insbesondere bei weit erstreckten Kommunikationsnetzwerken, welche einheitliche Schlüssel einsetzen, kann dieser Fall in der Praxis auftreten.

Es ist daher die Aufgabe der Erfindung, eine Kommunikationsvorrichtung, ein Kommunikationsnetzwerk, sowie ein Verfahren zur Kommunikation zu schaffen, welche eine sehr hohe Sicherheit der Kommunikation gewährleisten.

Die Aufgabe wird durch die Merkmale der unabhängigen Ansprüche gelöst.

Weitere Ausführungsformen sind Gegenstand der abhängigen Ansprüche.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: ein Ausführungsbeispiel eines erfindungsgemäßen Kommunikationsnetzwerks;
- Fig. 2A: ein Ausführungsbeispiel eines nicht verschlüsselten Datenpakets;
- Fig. 2B: ein Ausführungsbeispiel, wie das Datenpaket aus Fig. 2A von der erfindungsgemäßen Kommunikationsvorrichtung weiterverarbeitet wird;
- Fig. 3: ein Ausführungsbeispiel der Recheneinheit einer erfindungsgemäßen Kommunikationsvorrichtung;
- Fig. 4: ein Ausführungsbeispiel eines Initialisierungsvektors in einer erfindungsgemäßen Kommunikationsvorrichtung;
- Fig. 5: ein Ausführungsbeispiel des erfindungsgemäßen Kommunikationsverfahrens in einem Flussdiagramm;

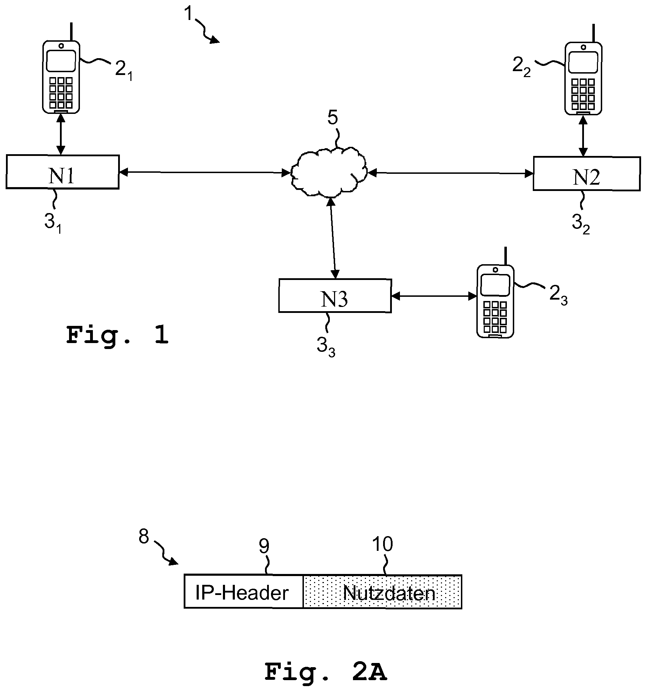

Fig. 1 beschreibt einen Anwendungsfall für das erfindungsgemäße Kommunikationsnetzwerk 1. Drei erfindungsgemäße Kommunikationsvorrichtungen 2₁, 2₂, 2₃, die in dem Ausführungsbeispiel aus Fig. 1 als Mobiltelefone dargestellt sind, tauschen beim Bestehen z.B. einer Sprachverbindung gegenseitig Datenpakete 8 aus. Bei den auszutauschenden Datenpaketen 8 handelt es sich in diesem Ausführungsbeispiel um IP-Datenpakete (engl. Internet Protocol; dt. Internet Protokoll). Die Kommunikationsvorrichtungen 2₁, 2₂, 2₃ sind in diesem Ausführungsbeispiel mit dem Teil-Netzwerk 3₁ bzw. mit dem Teil-Netzwerk 3₂ bzw. mit dem Teil-Netzwerk 3₃ verbunden. Die Teil-Netzwerke 3₁, 3₂ und 3₃ sind über eine Funkübertragung 5 durch eine Luftschnittstelle miteinander verbunden. Einer solchen Funkübertragung 5 können häufig Störungen überlagert sein. Auch eine Verbindung der Kommunikationsvorrichtungen 2₁, 2₂, 2₃ zum Internet ist an der Verbindungsstelle der Teil-Netzwerke 3₁, 3₂ und 3₃ möglich.

Fig. 2A zeigt ein Ausführungsbeispiel eines Datenpakets 8, welches zwischen den Kommunikationsvorrichtungen 2₁, 2₂, 2₃ ausgetauscht wird. Bei dem Datenpaket 8 handelt es sich in diesem Ausführungsbeispiel um ein IP-Datenpaket. Das Datenpaket 8 weist einen Bereich auf, in dem sich ein IP-Header 9 (engl. IP-Header; dt. IP-Kopf) befindet, und einen Bereich, in dem sich die Nutzdaten 10 befinden. Für den Fall, dass das Datenpaket 8 aus Fig. 2A von der Kommunikationsvorrichtung 2₁ zu der Kommunikationsvorrichtung 2₂ übertragen wird, befindet sich in dem IP-Header 9 beispielsweise die Information über die Zieladresse in dem Teil-Netzwerk 3₂, die auch als Steuerdaten bezeichnet werden können.

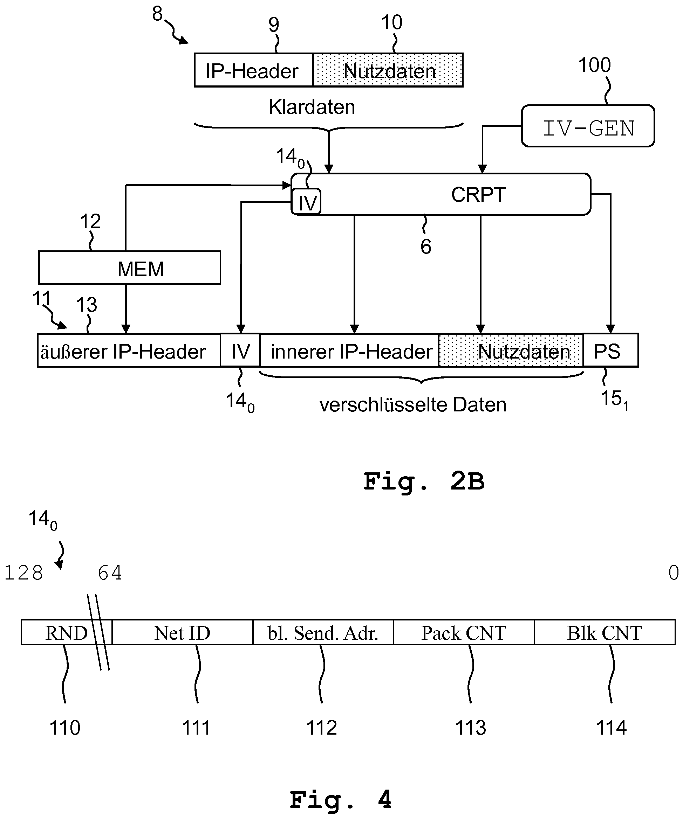

Fig. 2B zeigt die Weiterverarbeitung des Datenpakets 8 durch eine erfindungsgemäße Kommunikationsvorrichtung 2₁, 2₂, 2₃ mit einer integrierten Verschlüsselungseinheit 6. Ein von der Kommunikationsvorrichtung 2₁ an die Kommunikationsvorrichtung 2₂ gesendetes Datenpaket 8, welches einen Bereich mit einem IP-Header 9 und einen Bereich mit den Nutzdaten 10 umfasst, wird an die Verschlüsselungseinheit 6 übergeben. Im Folgenden wird ein neues IP-Datenpaket 11 beschrieben, welches über ein gemeinsames Medium, wie zum Beispiel das Internet übertragen werden kann und in seinem Nutzdatenbereich das verschlüsselte Datenpaket 8 transportiert.

Hierzu wird aus einer Speichereinheit 12 die öffentliche IP-Adresse der Kommunikationsvorrichtung 2₂ ausgelesen. Diese IP-Adresse aus dem öffentlichen Adressraum wird als Zieladresse in einen äußeren IP-Header 13 eingetragen. Der IP-Header 9 und die Nutzdaten 10 aus dem Datenpaket 8 werden durch die Verschlüsselungseinheit 6 verschlüsselt und in den Nutzdatenbereichs des IP-Datenpakets 11 übertragen.

Eine Reihe von Netzwerkinformationen, wie z.B. die Zieladresse, werden einem Initialisierungsvektor-Generator 100 zugeführt. Alternativ oder zusätzlich können weitere Netzwerkinformationen, wie anhand von Fig. 4 dargestellt, genutzt werden. Der Initialisierungsvektor-Generator 100 generiert hieraus einen Startwert für einen Initialisierungsvektor 14₀. Dieser wird der Verschlüsselungseinheit 6 zugeführt, welche hieraus für jeden Verschlüsselungsvorgang einen Initialisierungsvektor 14₀ generiert. Die Verschlüsselung wird basierend auf dem Initialisierungsvektor 14₀ durchführt. Auf die Generierung des Initialisierungsvektors wird anhand von Fig. 4 näher eingegangen. Alternativ kann auch der Initialisierungsvektor-Generator 100 sämtliche Initialisierungsvektoren erzeugen.

Dieser Initialisierungsvektor 14₀ wird zusätzlich zumindest teilweise in den Nutzdatenbereich des IP-Datenpakets 11 hinzugefügt und ist nicht verschlüsselt. Darüber hinaus wird eine ebenfalls nicht verschlüsselte Prüfsumme 15₁ an das Paket angehängt.

Die Kommunikationsvorrichtung 2₂ empfängt und entschlüsselt das IP-Datenpaket 11 und leitet den Inhalt, bestehend aus den verschlüsselten Nutzdaten, sowie den Initialisierungsvektor 14₀ an eine Entschlüsselungseinheit 7 weiter, die die verschlüsselten Daten entschlüsselt, so dass diese im Anschluss daran weiterverarbeitet werden können.

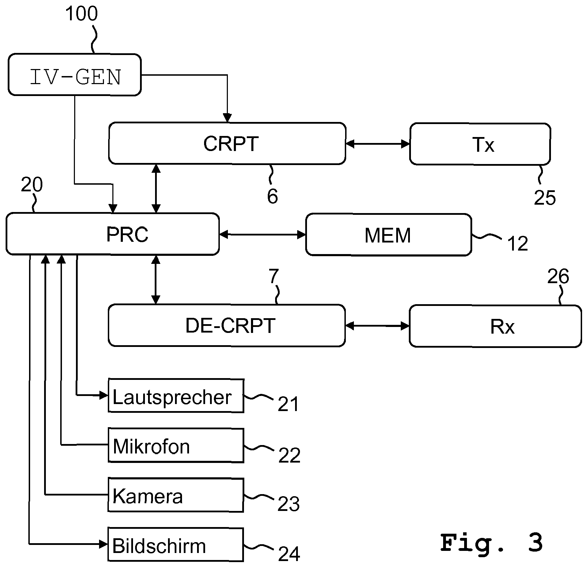

Fig. 3 zeigt ein Ausführungsbeispiel einer Kommunikationsvorrichtung mit einer integrierten Verschlüsselungseinheit 6 und einer integrierten Entschlüsselungseinheit 7. Der Kern der Kommunikationsvorrichtung ist eine zentrale Datenverarbeitungseinheit 20. Bei dieser zentralen Datenverarbeitungseinheit 20 kann es sich beispielsweise um einen Signalprozessor oder um einen programmierbaren Logikbaustein handeln. Die zentrale Datenverarbeitungseinheit 20 ist sowohl mit der Verschlüsselungseinheit 6 als auch mit der Entschlüsselungseinheit 7 verbunden. An die zentrale Verarbeitungseinheit 20 ist ebenfalls die Speichereinheit 12 angeschlossen. Die Verschlüsselungseinheit 6 ist weiterhin mit einem Initialisierungsvektor-Generator 100 verbunden, welcher seinerseits wiederum mit der Datenverarbeitungseinheit 20 verbunden ist.

In dem erfindungsgemäßen Ausführungsbeispiel aus Fig. 3 sind an die zentrale Datenverarbeitungseinheit 20 zusätzlich ein Lautsprecher 21, ein Mikrofon 22, ein Kamerasystem 23 und eine Bildschirmeinheit 24 angeschlossen. Es müssen allerdings nicht genau diese und auch nicht alle vier Systeme 21, 22, 23, 24 an die zentrale Datenverarbeitungseinheit 20 angeschlossen sein, es können auch nur eines oder mehrere dieser Systeme 21, 22, 23, 24 mit der zentralen Datenverarbeitungseinheit 20 verbunden sein. Die zentrale Datenverarbeitungseinheit 20 nimmt einen Datenstrom von dem zumindest einen Mikrofon 22 oder dem zumindest einen Kamerasystem 23 entgegen und codiert diesen optional, bevor der Datenstrom an die Verschlüsselungseinheit 6 weitergeleitet wird. Unter Heranziehung eines Startwerts eines Initialisierungsvektors 14₀, welcher von dem Initialisierungsvektor-Generator 100 zur Verfügung gestellt wird, verschlüsselt diese den Datenstrom. Der Initialisierungsvektor-Generator 100 nutzt hierzu Informationen, die das Kommunikationsnetzwerk betreffen, welche er von der Datenverarbeitungseinheit 20 empfängt. Auf die Erzeugung dieses Startwerts wird anhand von Fig. 4 näher eingegangen. Auf der anderen Seite nimmt die zentrale Datenverarbeitungseinheit 20 einen Datenstrom von der Entschlüsselungseinheit 7 entgegen und decodiert diesen optional, bevor er an den zumindest einen Lautsprecher 21 bzw. Ohrhörer oder an die zumindest ein Bildschirmeinheit 24 weitergeleitet wird.

Die Verschlüsselungseinheit 6 ist in dem Ausführungsbeispiel aus Fig. 3 mit der Sendeeinheit 25 verbunden. Die Entschlüsselungseinheit 7 ist in dem Ausführungsbeispiel aus Fig. 3 mit der Empfangseinheit 26 verbunden. Gemäß dem Ausführungsbeispiel aus Fig. 1 kann es sich bei der Sendeeinheit 25 und der Empfangseinheit 26 alternativ auch um eine drahtgebundene Übertragungsstrecke, z.B. eine Netzwerkverbindung handeln. Es ist aber ebenfalls möglich, dass es sich bei der Sendeeinheit 25 und der Empfangseinheit 26 um eine Kommunikationseinheit handelt, die eine drahtlose Datenübertragung ermöglicht. In diesem Fall beinhaltet die Sendeeinheit 25 die notwendigen Aufbereitungs- und Verstärkerstufen, wobei die Empfangseinheit 26 die entsprechenden Mischeranordnungen zum Empfangen eines durch die Luft übertragenen Datenstroms in den dafür möglichen Frequenzbändern, wie z.B. HF (engl. high frequency; dt. Hochfrequenz), VHF (engl. very high frequency; dt. Ultrakurzwelle) oder UHF (engl. ultra high frequency; dt. Dezimeterwelle) und Vorrichtungen zum Digitalisieren des Basisbandsignals beinhaltet. Übertragungsfehler entstehen dann beispielsweise aufgrund eines schlechten Übertragungskanals.

In Fig. 4 ist der Aufbau eines Initialisierungsvektors 14₀, wie er von der erfindungsgemäßen Kommunikationsvorrichtung erzeugt wird, dargestellt. Der Initialisierungsvektor 14₀ weist dabei eine Länge von z.B. 128 Bit auf. Die oberen z.B. 64 Bit zwischen Bit 64 und Bit 128 werden durch einen zufälligen Abschnitt 110 gebildet. Dieser Abschnitt 110 wird mittels eines Zufallsgenerators, welcher weitgehend gleichverteile Zufallszahlen liefert, erzeugt. Die übrigen z.B. 64 Bit des Initialisierungsvektors 14₀ werden durch Informationen das Kommunikationsnetzwerk betreffend gebildet. Er setzt sich hier zusammen aus einer Netzwerkidentifikationsnummer 111, einer Senderadresse 112, einer Paketnummer 113 und einer Blocknummer 114. Die Netzwerkidentifikationsnummer 111 ist dabei einzigartig für das Kommunikationsnetzwerk oder für Teil-Netzwerke 3₁, 3₂, 3₃ des Kommunikationsnetzwerks 1.

Die Paketnummer 113 entspricht der Nummer des gerade ausgesendeten Pakets. Die Blocknummer 114 entspricht der Nummer des gerade ausgesendeten Blocks. Auch ein Einsatz abweichender Informationen ist jedoch möglich. Auch ein Verzicht auf einzelne der hier dargestellten Informationen ist möglich. Durch die Kombination des zufälligen Anteils 110 mit zumindest einem Parameter des Kommunikationsnetzwerks ergibt sich eine eindeutige Zuordnung des Initialisierungsvektors 14₀. Der Initialisierungsvektor-Generator 100 aus Fig. 2B und Fig. 3 erzeugt dabei vorteilhafterweise lediglich einen Startwert des Initialisierungsvektors 14₀. Das Durchzählen der Paketnummer 113 und der Blocknummer 114 wird durch die Verschlüsselungseinheit 6 erledigt.

Wie anhand von Fig. 2B erläutert, wird der Initialisierungsvektor 14₀ unverschlüsselt als Teil des ausgesendeten Pakets übertragen. Alternativ kann lediglich ein Ausschnitt des Initialisierungsvektors übertragen werden. So wird dann lediglich der Teil des Initialisierungsvektors 14₀ übertragen, welcher dem Empfänger nicht bereits bekannt ist. Befinden sich Sender und Empfänger innerhalb eines identischen Kommunikationsnetzwerks, so ist es z.B. nicht notwendig, die Netzwerkidentifikationsnummer 111 zu übertragen. Wurde bereits ein vorheriges Paket oder ein vorheriger Block an den Empfänger übertragen, so ist es auch nicht notwendig, die Paketnummer 113 bzw. die Blocknummer 114 zu übertragen. Auch auf Empfängerseite können diese Parameter hochgezählt werden. So kann der für die Übertragung benötigte Zeitraum reduziert werden.

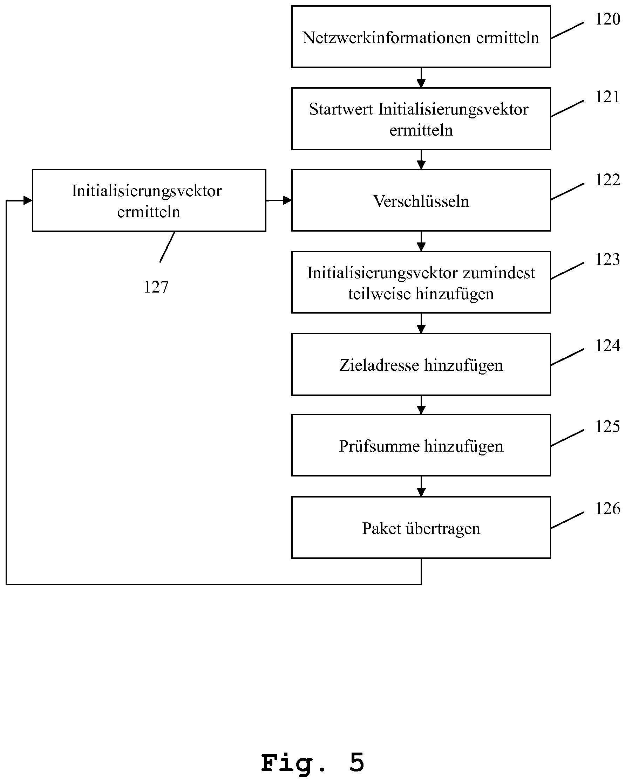

In Fig. 5 ist ein Ausführungsbeispiel des erfindungsgemäßen Kommunikationsverfahrens in einem Flussdiagramm dargestellt. In einem ersten Schritt 120 werden Informationen das Kommunikationsnetzwerk betreffend ermittelt. Hierzu gehören beispielsweise eine Netzwerkidentifikationsnummer, eine Senderadresse, eine Blocknummer oder eine Paketnummer. In einem zweiten Schritt 121 wird ein Startwert des Initialisierungsvektors basierend auf diesen Netzwerkinformationen ermittelt. Hierzu werden die Netzwerkinformationen mit einem zufälligen Anteil kombiniert. In einem dritten Schritt 122 werden zu übertragende Nutzdaten mittels eines Schlüssels und des Startwerts des Initialisierungsvektors verschlüsselt.

Daraufhin wird in einem vierten Schritt 123 den verschlüsselten Daten zumindest ein Teil des Initialisierungsvektors unverschlüsselt hinzugefügt. Hierbei kann entweder der gesamte Initialisierungsvektor hinzugefügt werden oder lediglich ein dem Empfänger des Pakets nicht bekannter Teil des Initialisierungsvektors. Teile des Initialisierungsvektors, welche dem Empfänger bekannt sind oder von diesem ausgerechnet werden können, müssen nicht mit in dem Paket übertragen werden.

In einem fünften Schritt 124 wird unverschlüsselt die Zieladresse der verschlüsselten Daten dem Paket hinzugefügt. In einem sechsten Schritt 125 wird weiterhin eine Prüfsumme hinzugefügt. In einem siebten Schritt 126 wird schließlich das verschlüsselte Paket übertragen.

In einem optionalen achten Schritt 127 wird basierend auf dem Startwert des Initialisierungsvektors aus dem zweiten Schritt 121 ein neuer Initialisierungsvektor ermittelt. Dies geschieht durch Hochzählen verschiedener Zähler. So kann Teil des Initialisierungsvektors ein Paketzähler oder ein Blockzähler sein. Diese werden in diesem Schritt hochgezählt. Die weiteren Schritte 122 - 126 werden so mit dem neuen Initialisierungsvektor wiederholt. Durch Ermitteln weiterer neuer Initialisierungsvektoren können die Schritte 122 - 127 beliebig oft durchlaufen werden. Es ist so sichergestellt, dass ein Initialisierungsvektor lediglich ein einziges Mal in dem gesamten Kommunikationsnetzwerk verwendet wird.

Das erfindungsgemäße Verfahren eignet sich besonders dafür, um in einem Programm implementiert zu werden, welches auf einem Computer oder einem digitalen Signalprozessor oder sonstigen elektronischen Recheneinheiten ausgeführt wird. Das Verfahren eignet sich ebenfalls besonders, um insbesondere auf einem maschinenlesbaren Träger als Programmcode gespeichert zu werden, damit das Programm später auf einem Computer oder einem digitalen Signalprozessor oder sonstigen elektronischen Recheneinheiten ausgeführt werden kann.

Die Erfindung ist nicht auf das dargestellte Ausführungsbeispiel beschränkt. Im Rahmen der Erfindung sind alle beschriebenen und/oder gezeichneten Merkmale beliebig vorteilhaft miteinander kombinierbar.

## Patentansprüche

1. Kommunikationsvorrichtung (2₁, 2₂, 2₃) zur Kommunikation in einem Kommunikationsnetzwerk (1), mit einer Verschlüsselungseinrichtung (6),
wobei die Verschlüsselungseinrichtung (6) ausgehende Nachrichten zumindest teilweise mittels eines Schlüssels und eines Initialisierungsvektors (14₀) verschlüsselt,
**dadurch gekennzeichnet,**
**dass** die Kommunikationsvorrichtung (2₁, 2₂, 2₃) einen Initialisierungsvektor-Generator (100) aufweist, welcher zumindest einen Initialisierungsvektor (14₀) erzeugt, der folgendes aufweist: einen zufälligen Abschnitt (110), eine Senderadresse (112) der Kommunikationsvorrichtung, und eine Packet- und/oder Blocknummer (113, 114).

2. Kommunikationsvorrichtung (2₁, 2₂, 2₃) nach Anspruch 1,
**dadurch gekennzeichnet,**
**dass** der Initialisierungsvektor-Generator (100) den Initialisierungsvektor (140) zumindest teilweise basierend auf einer Netzwerkidentifikationsnummer (111) des Kommunikationsnetzwerks erzeugt.

3. Kommunikationsvorrichtung (2₁, 2₂, 2₃) nach Anspruch 1 oder 2,
**dadurch gekennzeichnet,**
**dass** der Initialisierungsvektor-Generator (100) bei einem Kommunikationsvorgang einen ersten Wert des Initialisierungsvektors (14₀) als Startwert erzeugt, und
**dass** die Verschlüsselungseinrichtung (6) basierend auf dem Startwert weitere Initialisierungsvektoren (140₀) für die weitere Verschlüsselung dieses Kommunikationsvorgangs erzeugt.

4. Kommunikationsvorrichtung (2₁, 2₂, 2₃) nach einem der Ansprüche 1 bis 3,
**dadurch gekennzeichnet,**
**dass** die ausgehenden Nachrichten mit dem Schlüssel und dem Initialisierungsvektor (14₀) verschlüsselte Nutzdaten (10) und unverschlüsselt zumindest einen Teil des jeweils eingesetzten Initialisierungsvektors (14₀) beinhalten.

5. Kommunikationsvorrichtung (2₁, 2₂, 2₃) nach einem der Ansprüche 1 bis 4,
**dadurch gekennzeichnet,**
**dass** der Initialisierungsvektor-Generator (100) den zumindest einen Initialisierungsvektor (14₀) derart erzeugt, dass er in dem Kommunikationsnetzwerk (1) einzigartig ist.

6. Kommunikationsnetzwerk (1) mit mehreren Kommunikationsvorrichtungen (2₁, 2₂, 2₃),
**dadurch gekennzeichnet,**
**dass** sämtliche Kommunikationsvorrichtungen (2₁, 2₂, 2₃) in dem Kommunikationsnetzwerk (1) Kommunikationsvorrichtungen (2₁, 2₂, 2₃) nach einem der Ansprüche 1 bis 5 sind.

7. Kommunikationsverfahren zur Kommunikation in einem Kommunikationsnetzwerk (1) mit Kommunikationsvorrichtung, wobei ausgehende Nachrichten mit einer Verschlüsselungseinrichtung der Kommunikationsvorrichtung zumindest teilweise mittels eines Schlüssels und eines Initialisierungsvektors (14₀) verschlüsselt werden,
**dadurch gekennzeichnet,**
**dass** zumindest ein Initialisierungsvektor (140) mittels eines Initialisierungsvektor-Generators der Kommunikationsvorrichtung erzeugt wird, der folgendes aufweist: einen zufälligen Abschnitt (110), eine Senderadresse (112), der Kommunikationsvorrichtung und eine Packet- und/oder Blocknummer (113, 114).

8. Kommunikationsverfahren nach Anspruch 7,
**dadurch gekennzeichnet,**
**dass** der Initialisierungsvektor (140) zumindest teilweise basierend auf einer Netzwerkidentifikationsnummer (111) des Kommunikationsnetzwerks (1) erzeugt wird.

9. Kommunikationsverfahren nach einem der Ansprüche 7 oder 8,
**dadurch gekennzeichnet,**
**dass** bei einem Kommunikationsvorgang ein erster Wert des Initialisierungsvektors (14₀) als Startwert erzeugt wird, und
**dass** basierend auf dem Startwert weitere Initialisierungsvektoren (14₀) für die weitere Verschlüsselung dieses Kommunikationsvorgangs erzeugt werden.

10. Kommunikationsverfahren nach einem der Ansprüche 7 bis 9,
**dadurch gekennzeichnet,**
**dass** die ausgehenden Nachrichten mit dem Schlüssel und dem Initialisierungsvektor (14₀) verschlüsselte Nutzdaten (10) und unverschlüsselt zumindest einen Teil des jeweils eingesetzten Initialisierungsvektors (14₀) beinhalten.

11. Kommunikationsverfahren nach einem der Ansprüche 7 bis 10,
**dadurch gekennzeichnet,**
**dass** der zumindest eine Initialisierungsvektor (14₀) derart erzeugt wird, dass er in dem Kommunikationsnetzwerk (1) einzigartig ist.

12. Computerprogramm mit Programmcode-Mitteln, um alle Schritte gemäß einem der Ansprüche 7 bis 11 durchführen zu können, wenn das Programm auf einem Computer oder einem digitalen Signalprozessor oder sonstigen elektronischen Recheneinheiten ausgeführt wird.

13. Computerprogramm-Produkt mit insbesondere auf einem maschinenlesbaren Träger gespeicherten Programmcode-Mitteln, um alle Schritte gemäß einem der Ansprüche 7 bis 11 durchführen zu können, wenn das Programm auf einem Computer oder einem digitalen Signalprozessor oder sonstigen elektronischen Recheneinheiten ausgeführt wird.

## Claims

1. Communication apparatus (2₁, 2₂, 2₃) for communication in a communication network (1), having an encryption device (6), wherein the encryption device (6) encrypts outgoing messages at least in part by means of a key and an initialization vector (14₀),
**characterized**
**in that** the communication apparatus (2₁, 2₂, 2₃) has an initialization vector generator (100) that generates at least one initialization vector (14₀) that has the following: a random section (110), a sender address (112) of the communication apparatus and a packet and/or block number (113, 114).

2. Communication apparatus (2₁, 2₂, 2₃) according to Claim 1,
**characterized**
**in that** the initialization vector generator (100) generates the initialization vector (140) at least in part on the basis of a network identification number (111) of the communication network.

3. Communication apparatus (2₁, 2₂, 2₃) according to Claim 1 or 2,
**characterized**
**in that** in a communication process the initialization vector generator (100) generates a first value of the initialization vector (14₀) as a starting value, and
**in that** the encryption device (6) takes the starting value as a basis for generating further initialization vectors (140₀) for the further encryption of this communication process.

4. Communication apparatus (2₁, 2₂, 2₃) according to one of Claims 1 to 3,
**characterized**
**in that** the outgoing messages contain useful data (10) encrypted with the key and the initialization vector (14₀) and at least part of the respectively used initialization vector (14₀) in unencrypted form.

5. Communication apparatus (2₁, 2₂, 2₃) according to one of Claims 1 to 4,
**characterized**
**in that** the initialization vector generator (100) generates the at least one initialization vector (14₀) such that it is unique in the communication network (1).

6. Communication network (1) having multiple communication apparatuses (2₁, 2₂, 2₃),
**characterized**
**in that** all of the communication apparatuses (2₁, 2₂, 2₃) in the communication network (1) are communication apparatuses (2₁, 2₂, 2₃) according to one of Claims 1 to 5.

7. Communication method for communication in a communication network (1) having a communication apparatus, wherein outgoing messages are encrypted using an encryption device of the communication apparatus at least in part by means of a key and an initialization vector (14₀),
**characterized**
**in that** at least one initialization vector (140) is generated by means of an initialization vector generator of the communication apparatus and has the following: a random section (110), a sender address (112) of the communication apparatus and a packet and/or block number (113, 114).

8. Communication method according to Claim 7,
**characterized**
**in that** the initialization vector (140) is generated at least in part on the basis of a network identification number (111) of the communication network (1).

9. Communication method according to either of Claims 7 and 8,
**characterized**
**in that** in a communication process a first value of the initialization vector (14₀) is generated as a starting value, and
**in that** the starting value is taken as a basis for generating further initialization vectors (14₀) for the further encryption of this communication process.

10. Communication method according to one of Claims 7 to 9,
**characterized**
**in that** the outgoing messages contain useful data (10) encrypted with the key and the initialization vector (14₀) and at least part of the respectively used initialization vector (14₀) in unencrypted form.

11. Communication method according to one of Claims 7 to 10,
**characterized**
**in that** the at least one initialization vector (14₀) is generated such that it is unique in the communication network (1).

12. Computer program having program code means in order to be able to perform all the steps according to one of Claims 7 to 11 when the program is executed on a computer or a digital signal processor or other electronic computing units.

13. Computer program product having program code means stored in particular on a machine-readable carrier in order to be able to perform all the steps according to one of Claims 7 to 11 when the program is executed on a computer or a digital signal processor or other electronic computing units.

## Revendications

1. Dispositif de communication (2₁, 2₂, 2₃) aux fins de communication dans un réseau de communication (1), avec un dispositif de chiffrement (6),
dans lequel le dispositif de chiffrement (6) chiffre des messages sortants au moins en partie au moyen d'une clé et d'un vecteur d'initialisation (14₀),
**caractérisé**
**en ce que** le dispositif de communication (2₁, 2₂, 2₃) présente un générateur de vecteur d'initialisation (100), lequel génère au moins un vecteur d'initialisation (14₀), qui présente les éléments suivants : une partie aléatoire (110), une adresse d'émetteur (112) du dispositif de communication, et un numéro de paquet et/ou de bloc (113, 114).

2. Dispositif de communication (2₁, 2₂, 2₃) selon la revendication 1,
**caractérisé**
**en ce que** le générateur de vecteur d'initialisation (100) génère le vecteur d'initialisation (140) au moins en partie sur la base d'un numéro d'identification de réseau (111) du réseau de communication.

3. Dispositif de communication (2₁, 2₂, 2₃) selon la revendication 1 ou 2,
**caractérisé**
**en ce que** le générateur de vecteur d'initialisation (100), lors d'un processus de communication, génère une première valeur du vecteur d'initialisation (14₀) en tant que valeur de départ, et
**en ce que** le dispositif de chiffrement (6), sur la base de la valeur de départ, génère d'autres vecteurs d'initialisation (14₀) pour l'autre chiffrement de ce processus de communication.

4. Dispositif de communication (2₁, 2₂, 2₃) selon l'une quelconque des revendications 1 à 3,
**caractérisé**
**en ce que** les messages sortants comprennent des données utiles (10) chiffrées avec la clé et le vecteur d'initialisation (14₀) et, non chiffrées, au moins une partie du vecteur d'initialisation (14₀) respectivement utilisé.

5. Dispositif de communication (2₁, 2₂, 2₃) selon l'une quelconque des revendications 1 à 4,
**caractérisé**
**en ce que** le générateur de vecteur d'initialisation (100) génère l'au moins un vecteur d'initialisation (14₀) de telle sorte qu'il est unique dans le réseau de communication (1).

6. Réseau de communication (1) avec plusieurs dispositifs de communication (2₁, 2₂, 2₃),
**caractérisé**
**en ce que** tous les dispositifs de communication (2₁, 2₂, 2₃) dans le réseau de communication (1) sont des dispositifs de communication (2₁, 2₂, 2₃) selon l'une quelconque des revendications 1 à 5.

7. Procédé de communication aux fins de communication dans un réseau de communication (1) avec un dispositif de communication,
dans lequel des messages sortants sont chiffrés avec un dispositif de chiffrement du dispositif de communication au moins en partie au moyen d'une clé et d'un vecteur d'initialisation (14₀),
**caractérisé**
**en ce qu'**au moins un vecteur d'initialisation (140) est généré au moyen d'un générateur de vecteur d'initialisation du dispositif de communication, qui présente les éléments suivants : une partie aléatoire (110), une adresse d'émetteur (112) du dispositif de communication et un numéro de paquet et/ou de bloc (113, 114).

8. Procédé de communication selon la revendication 7,
**caractérisé**
**en ce que** le vecteur d'initialisation (140) est généré au moins en partie sur la base d'un numéro d'identification de réseau (111) du réseau de communication (1).

9. Procédé de communication selon l'une quelconque des revendications 7 ou 8,
**caractérisé**
**en ce que**, lors d'un processus de communication, une première valeur du vecteur d'initialisation (14₀) est générée en tant que valeur de départ,
et
**en ce que**, sur la base de la valeur de départ, d'autres vecteurs d'initialisation (14₀) pour l'autre chiffrement de ce processus de communication sont générés.

10. Procédé de communication selon l'une quelconque des revendications 7 à 9,
**caractérisé**
**en ce que** les messages sortants comprennent des données utiles (10) chiffrées avec la clé et le vecteur d'initialisation (14₀) et, non chiffrées, au moins une partie du vecteur d'initialisation (14₀) respectivement utilisé.

11. Procédé de communication selon l'une quelconque des revendications 7 à 10,
**caractérisé**
**en ce que** l'au moins un vecteur d'initialisation (14₀) est généré de telle sorte qu'il est unique dans le réseau de communication (1).

12. Programme informatique avec des moyens formant code de programme, afin de pouvoir exécuter toutes les étapes selon l'une quelconque des revendications 7 à 11, lorsque le programme est exécuté sur un ordinateur ou un processeur de signal numérique ou d'autres unités de calcul électroniques.

13. Produit-programme informatique avec en particulier des moyens formant code de programme mis en mémoire sur un support lisible par machine, afin de pouvoir exécuter toutes les étapes selon l'une quelconque des revendications 7 à 11, lorsque le programme est exécuté sur un ordinateur ou un processeur de signal numérique ou d'autres unités de calcul électroniques.
